# EUROPÄISCHE PATENTSCHRIFT

(11) **EP 1 700 391 B1**
(45) Veröffentlichungstag und Bekanntmachung des Hinweises auf die Patenterteilung: **27.02.2008**
(21) Anmeldenummer: 04804989.4
(22) Anmeldetag: 22.12.2004
(51) Int. Cl.: H04B 3/54

(54) **SCHALTUNGSANORDNUNG ZUR ÜBERTRAGUNG VON DATENSIGNALEN VON UND/ODER ZU HAUSGERÄTEN**
CIRCUIT ARRANGEMENT FOR THE TRANSMISSION OF DATA SIGNALS FROM AND/OR TO HOUSEHOLD APPLIANCES
CIRCUITERIE POUR TRANSMETTRE DES SIGNAUX DE DONNEES DEPUIS ET/OU VERS DES APPAREILS ELECTROMENAGERS

(30) Priorität: 22.12.2003 DE 10360565
(43) Veröffentlichungstag der Anmeldung: 13.09.2006
(60) Teilanmeldung: 07010457.5
(73) Patentinhaber: BSH Bosch und Siemens Hausgeräte GmbH, 81739 München (DE)
(72) Erfinder: HERTEL, Udo, 93059 Regensburg (DE); PIERMEIER, Simon, 94379 Sankt Englmar (DE)
(86) Internationale Anmeldenummer: PCT/EP2004/053656
(87) Internationale Veröffentlichungsnummer: WO 2005/062484

(56) Entgegenhaltungen:
- WO-A-02/30003
- DE-U1- 20 206 728
- JP-A- 2002 094 348
- US-A- 5 805 053
- US-A1- 2003 160 684

## Beschreibung

Die Erfindung bezieht sich auf eine Schaltungsanordnung zur Übertragung von Datensignalen von und/oder zu Hausgeräten zwischen einer ersten Sende-/Empfangseinrichtung und einer zweiten Sende-/Empfangseinrichtung über eine Netzwechselspannungs-Leitungsanordnung in einem Übertragungsfrequenzbereich, der oberhalb der Frequenz der Netzwechselspannung liegt, wobei die jeweilige Sende-/Empfangseinrichtung ein Netzteil enthält, welches mit seinem Eingangskreis über ein Netz-Tiefpassfilter an der Netzwechselspannungs-Leitungsanordnung angeschlossen ist.

Bei einer bekannten Schaltungsanordnung der vorstehend genannten Art (US-A-5 805 053) erfolgt eine Übertragung von Datensignalen von und/oder zu Hausgeräten zwischen einer ersten-Sende-Empfangseinrichtung und einer zweiten Sende-Empfangseinrichtung über eine Netzwechselspannungs-Leitungsanordnung in einem Übertragungsfrequenzbereich, der oberhalb der Frequenz der Netzwechselspannung liegt, wobei die jeweilige Sende-/Empfangseinrichtung mit einer Filteranordnung an der Netzwechselspannungs-Leitungsanordnung angeschlossen ist. Die jeweilige Filteranordnung enthält ein im Eingangskreis eines Netzteiles der zugehörigen Sende-/Empfangseinrichtung angeordnetes Netz-Tiefpassfilter. Bezüglich dieses Tiefpassfilters ist es lediglich bekannt, dass es einen Pfad hoher Impedanz für die Signalfrequenzen der Informationssignale von der Netzwechselspannungs-Leitungsanordnung schafft. Über die eigentliche Bemessung des betreffenden Tiefpassfilters ist indessen nichts bekannt.

Bei einer anderen bekannten Schaltungsanordnung zur Übertragung von Datensignalen von und/oder zu Hausgeräten zwischen einer ersten Sende-/Empfangseinrichtung und einer zweiten Sende-/Empfangseinrichtung über eine Netzwechselspannungs-Leitungsanordnung (US 6.396.392 B1) umfasst die jeweilige Sende-/Empfangseinrichtung ein mit dem jeweiligen Hausgerät verbundenes Modem, welches über einen Koppler an der Netzwechselspannungs-Leitungsanordnung angeschlossen ist. Sowohl im Modem als auch im Koppler sind verschiedene Filter, wie Tiefpassfilter, enthalten, und der jeweilige Koppler ist sowohl eingangsseitig als auch ausgangsseitig impedanzmäßig an die Impedanz der Netzwechselspannungs-Leitungsanordnung angepasst (siehe insbesondere Fig. 2 und Fig. 11 von US 6.396.392 B1). Über den Einsatz von Filteranordnungen im Netzwechselspannungseingangskreis des jeweiligen Hausgeräts ist in diesem Zusammenhang indessen nichts bekannt.

Bei einer weiteren bekannten Schaltungsanordnung zur Übertragung von Datensignalen von und/oder zu Hausgeräten (US 6.590.493 B1) ist jeweils ein Verband von einzelnen Hausgeräten über eine gesonderte Filteranordnung an einer Netzwechselspannungs-Leitungsanordnung angeschlossen. Die Filteranordnungen verschiedener Verbände von Hausgeräten sind dabei so bemessen, dass die in einem Verband von Hausgeräten gesendeten Datensignale nicht die zu einem anderen Verband von Hausgeräten gehörenden Hausgeräte erreichen können. Für die betreffenden Filteranordnungen werden LC-Tiefpassfilter unterschiedlicher Konfigurationen verwendet. Über Probleme mit einer Anpassung der Impedanzen derartiger Filteranordnungen an die Impedanz der Netzwechselspannungs-Leitungsanordnung ist in dem betreffenden Zusammenhang nichts bekannt.

Es ist auch schon ein Netzteilfilter im Eingangskreis eines Netzteiles eines Personalcomputers bekannt (WO 02/30003 A2). Dieses Netzteilfilter dient dazu, von dem Netzteil ausgehende hochfrequente elektromagnetische Störsignale (EMI) zu unterdrücken. Es weist ein induktives Bauelement in Form einer aus zwei Spulen bestehende stromkompensierten Drosselanordnung auf, durch die von dem betreffenden Netzteil her auftretende Gleichtakt-Störimpulse unterdrückt werden. Die eine Spule der beiden Spulen ist mit dem Netzleiter einer Netzwechselspannungs-Leitungsanordnung verbunden, und die andere Spule ist mit dem Nullleiter dieser Netzwechselspannungs-Leitungsanordnung verbunden. Zusätzlich sind die beiden Spulen auf der Seite der Netzwechselspannungs-Leitungsanordnung durch einen X-Kondensator miteinander verbunden, dem ein ohmscher Widerstand parallel geschaltet ist, und auf ihrer dem Netzteil zugewandten Seite sind die beiden Spulen durch zwei Y-Kondensatoren miteinander verbunden, deren gemeinsamer Verbindungspunkt an Erde liegt. Obwohl diese bekannte Netzfilteranordnung einen Tiefpasscharakter aufweist und von dem Netzteil ausgehende hochfrequente elektromagnetische Störsignale unterdrücken kann, ist jedoch über eine Anpassung der Impedanz der im Netzwechselspannungseingangskreis des betreffenden Geräts verwendeten Filteranordnung an die Impedanz der Netzwechselspannungs-Leitungsanordnung nichts bekannt.

Zur Vermeidung der Abgabe von HF-Störsignalen von einem an einer Netzwechselspannungs-Leitungsanordnung angeschlossenen Hausgerät ist es generell bekannt (Siemens Schaltbeispiele, Ausgabe 1974/75, Seite 128, Bild 6.4 und Seite 129, Bild 6.5), zwischen der spannungsführenden Netzleitung und einem Nullleiter eine Kondensatoranordnung anzuschließen, die aus einer Reihenschaltung zweier Kondensatoren (Y-Kondensatoren genannt) relativ niedriger Kapazität besteht, deren gemeinsamer Verbindungspunkt mit einem Masseanschluss des zugehörigen Netzteiles des betreffenden Hausgeräts verbunden ist. Gegebenenfalls wird dieser Kondensatorreihenschaltung ein einzelner Kondensator (X-Kondensator genannt) höherer Kapazität parallelgeschaltet. Eine Anpassung der Impedanz des Netzwechselspannungseingangskreises des betreffenden Hausgeräts an die Impedanz der die Netzwechselspannung liefernde Leitungsanordnung ist hier nicht vorgesehen.

Zusätzlich zu der zuletzt betrachteten Entstörungsmaßnahme ist es ferner bekannt (Siemens Schaltbeispiele, Ausgabe 1977/78, Seite 137, Bild 6.4. und Seite 152, Bild 6.8.) im Netzwechselspannungseingangskreis eines Gerätes eine stromkompensierte Drosselanordnung vorzusehen, die aus zwei Drosselwicklungen besteht, deren eine in der spannungsführenden Netzleitung liegt und deren andere im zugehörigen Nullleiter liegt. Durch eine solche stromkompensierte Drosselanordnung wird verhindert, dass von dem betreffenden Gerät her auftretende Gleichtakt-Störimpulse ins Netz gelangen können. Auch in diesem Fall ist über eine Anpassung der Impedanz der im Netzwechselspannungseingangskreis des betreffenden Geräts verwendeten Filteranordnung an die Impedanz der Netzwechselspannungs-Leitungsanordnung nichts bekannt.

Es ist überdies auch schon ein im Gleichspannungspfad eines AC/DC-Wandlers liegendes Leitungsfilter bekannt (JP 2002094348 A), das eine an eine nachfolgende Schaltungsstufe abzugebende Gleichspannung nicht augenblicklich abfallen lässt, wenn die Ausgangsspannung des betreffenden Wandlers absinkt. Zu diesem Zweck weist das betreffende Leitungsfilter auf der einen Seite einer stromkompensierten Drosselanordnung einen X-Kondensator und zwei Y-Kondensatoren und auf der anderen Seite dieser Drosselanordnung einen X-Kondensator mit einer Kapazität im Bereich zwischen 100µF bis 470mF auf. Ein solches Leitungsfilter eignet sich allerdings nicht ohne weiteres für die Bildung eines Tiefpassfilters in einer Schaltungsanordnung der eingangs genannten Art.

Es ist schließlich auch schon eine Schaltungsanordnung zur Übertragung von Datensignalen zwischen Modemschaltungen bekannt (US 2003/0160684 A1), die über Koppler an einer Netzwechselspannungsleitung angeschlossen sind. Die Koppler weisen jeweils einen Trenntransformator auf, der mit seiner einen Wicklung kapazitiv an der Netzwechselspannungsleitung angeschlossen ist. Den dazu verwendeten Kondensatoren ist jeweils ein ohmscher Widerstand parallel geschaltet. Über den Einsatz von Tiefpassfiltern und über deren Bemessung ist in diesem Zusammenhang nichts bekannt.

Bei einer Schaltungsanordnung, wie sie eingangs betrachtet worden ist, ist nun festgestellt worden, dass eine in Verbindung mit der jeweiligen Sende-/Empfangseinrichtung bisher verwendete Filteranordnung ähnlich der aus bekannten Filteranordnungen bei üblicher Dimensionierung den jeweils abgegebenen Sendepegel auf der Netzwechselspannungs-Leitungsanordnung stark herabsetzen kann, so dass derartige Signale nur über eine relativ kurze Entfernung von einer an der Netzwechselspannungs-Leitungsanordnung angeschlossenen Empfangseinrichtung ungestört empfangen werden können.

Der Erfindung liegt daher die Aufgabe zugrunde, einen Weg zu zeigen, wie unter Vermeidung des vorstehend aufgezeigten Nachteils eine Schaltungsanordnung der eingangs genannten Art mit relativ geringem Filteraufwand aufzubauen ist.

Gelöst wird die vorstehend aufgezeigte Aufgabe bei einer Schaltungsanordnung der eingangs genannten Art erfindungsgemäß dadurch, dass die jeweilige Filteranordnung ein im Eingangskreis eines Netzteiles der zugehörigen Sende-/Empfangseinrichtung angeordnetes Netz-Tiefpassfilter mit einem solchen Impedanzverlauf enthält, dass dessen Impedanz in dem genannten Übertragungsfrequenzbereich einen Wert aufweist, der mindestens doppelt so hoch bis höchstens vierfach so hoch ist wie die Impedanz der Netzwechselspannungs-Leitungsanordnung in dem betreffenden Übertragungsfrequenzbereich.

Die Erfindung bringt den Vorteil mit sich, dass durch die genannte Dimensionierung des im Eingangskreis eines Netzteiles der zugehörigen Sende-/Empfangseinrichtung angeordneten einzigen Netz-Tiefpassfilters erreicht ist, dass der von der betreffenden Sende-/Empfangseinrichtung an die Netzwechselspannungs-Leitungsanordnung abgegebene Sende pegel nicht so stark herabgesetzt wird, wie dies bei Einsatz der bisher verwendeten Filteranordnung der Fall ist. Auf die erfindungsgemäße Dimensionierung des erwähnten Netz-Tiefpassfilters wird weiter unten noch näher eingegangen werden. An dieser Stelle sei angemerkt, dass hier unter einer Sende-/Empfangseinrichtung fallweise eine Sende- und/oder Empfangseinrichtung verstanden wird.

Zweckmäßigerweise besteht bei einer wenigstens einen spannungsführenden Netzleiter und einen Nullleiter umfassenden Netzwechselspannungs-Leitungsanordnung das Netz-Tiefpassfilter aus einem in dem jeweiligen Netzleiter liegenden induktiven Bauelement und aus einer wenigstens an einem Ende des betreffenden induktiven Bauelements und dem Nullleiter angeordneten Kondensatoranordnung. Hierdurch ergibt sich der Vorteil eines besonders einfach zu realisierenden Netz-Tiefpassfilters.

Vorzugsweise besteht die vorstehend erwähnte Kondensatoranordnung aus einem das netzteilseitige Ende des induktiven Bauelements mit dem Nullleiter der Netzwechselspannungs-Leitungsanordnung verbindenden einzelnen Kondensator (X-Kondensator) und aus einer diesem einzelnen Kondensator parallelgeschalteten Reihenschaltung aus zwei Kondensatoren (Y-Kondensatoren), deren gemeinsamer Verbindungspunkt mit einem Masseanschluss des zugehörigen Netzteiles verbunden ist. Eine derart aufgebaute Kondensatoranordnung verhindert somit besonders wirksam, dass in dem zugehörigen Hausgerät bzw. der zugehörigen Sende-/Empfangseinrichtung entstehende HF-Störsignale in die Netzwechselspannungs-Leitungsanordnung gelangen.

Anhand von Zeichnungen wird die Erfindung nachstehend an einem Ausführungsbeispiel näher erläutert.
- Fig. 1: zeigt ein schematisches Diagramm einer Schaltungsanordnung gemäß einer Ausführungsform der vorliegenden Erfindung.
- Fig. 2: veranschaulicht in einem Ersatzschaltungsdiagramm die Impedanzverhältnisse auf der Sendeseite und auf der Empfangsseite bei Schaltungsanordnungen der in Fig. 1 dargestellten Art.
- Fig.3: zeigt den Aufbau eines Netz-Tiefpassfilters, wie es in einer Schaltungsanordnung gemäß Fig. 1 verwendet wird.

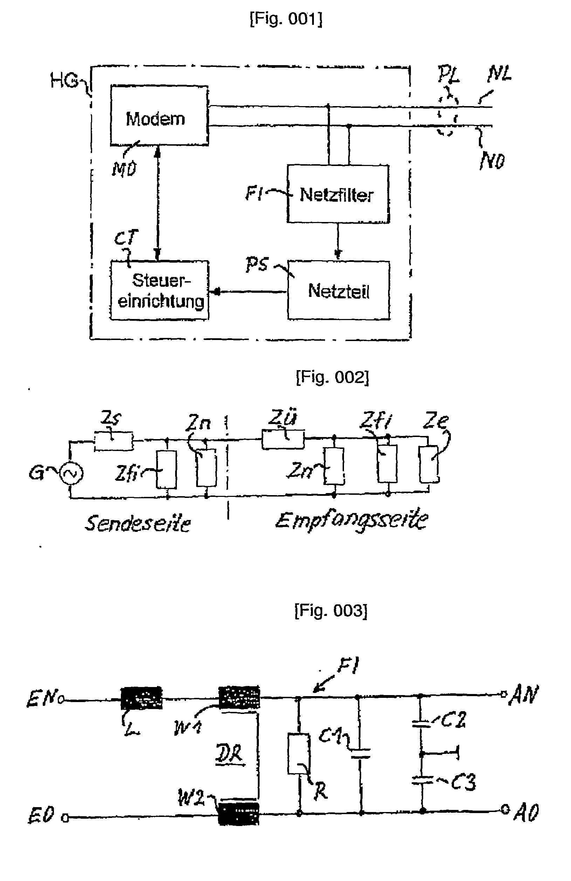

In Fig. 1 ist eine Ausführungsform einer zu einem Hausgerät HG gehörenden Schaltungsanordnung gemäß der vorliegenden Erfindung gezeigt. Bei dem betreffenden Hausgerät HG kann es sich um irgendein netzfähiges Hausgerät, wie um eine Waschmaschine, einen Trockner, einen Herd, ein Kühlgerät, eine Heizungsanlage, etc. handeln. Unter einem netzfähigen Hausgerät wird hier ein Hausgerät verstanden, das mittels einer Sende- und/oder Empfangseinrichtung an einem Kommunikationsnetz zur Übertragung von unterschiedlichsten Datensignalen anschließbar ist. Im vorliegenden Fall umfasst dieses Kommunikationsnetz das Netzwechselspannungsnetz, aus dem die für den Betrieb des jeweiligen Hausgerätes benötigten Versorgungsspannungen bezogen werden.

Die Schaltungsanordnung gemäß Fig. 1 umfasst eine Sende-/Empfangseinrichtung in Form eines Modems MO, welches mit seinem Sendeausgang und mit seinem Empfangseingang an einer Netzwechselspannungs-Leitungsanordnung PL des erwähnten Netzwechselspannungsnetzes angeschlossen ist. Diese Netzwechselspannungs-Leitungsanordnung PL umfasst im vorliegenden Fall lediglich einen spannungsführenden Netzleiter NL und einen Nullleiter NO; die betreffende Netzwechselspannungs-Leitungsanordnung ist also hier eine Einphasen-Netzwechselspannungs-Leitungsanordnung. Grundsätzlich kann jedoch auch eine Mehrphasen-Netzwechselspannungs-Leitungsanordnung genutzt werden.

An den beiden Leitungen NL und NO der Netzwechselspannungs-Leitungsanordnung NL ist ferner ein Netzfilter FI eingangsseitig angeschlossen. Dieses Netzfilter FI ist im vorliegenden Fall ein Netz-Tiefpassfilter, welches die Netzwechselspannung bei der Netzwechselspannungsfrequenz von 50 Hz oder 60 Hz sehr wenig, wenn überhaupt bedämpft. Die Impedanz des betreffenden Tiefpass-Netzfilters FI liegt bei der Netzwechselspannungsfrequenz allenfalls in der Größenordnung von einigen wenigen Milliohm. Hingegen ist die Impedanz des betreffenden Tiefpass-Netzfilters FI im Überkragungsfrequenzbereich, in welchem Datensignale von dem Modem MO und/oder zu diesem übertragen werden, wesentlich höher; sie liegt im Bereich von einigen Ohm. Hierauf wird weiter unten noch näher eingegangen werden.

Das vorstehend betrachtete Netzfilter FI ist dem Eingang eines Netzteiles PS vorgeschaltet, von dem die verschiedenen Versorgungsspannungen bereitgestellt werden, die von den einzelnen Einrichtungen bzw. Geräteteilen des betrachteten Hausgeräts HG benötigt werden. Im vorliegenden Fall ist lediglich eine Steuereinrichtung CT als stellvertretend für sämtliche vorgesehenen Einrichtungen des Hausgeräts HG dargestellt, die vom Netzteil PS ihre Versorgungsspannungen zugeführt erhalten. Die Steuereinrichtung CT ist mit dem Modem MO über Steuerleitungen für eine bidirektionale Signalübertragung verbunden. Dies bedeutet, dass das Modem MO von der Steuereinrichtung CT Steuersignale zugeführt erhält und dass umgekehrt der Steuereinrichtung CT vom Modem MO Signale zur Verarbeitung zugeführt werden. Derartige Signale ergeben sich in der Regel aus der Übertragung von Datensignalen, die von dem Modem MO über die Netzwechselspannungs-Leitungsanordnung PL abgegeben werden und/oder die über diese Netzwediselspannungs-Leitungsanordnung PL dem Modem MO zugeführt werden.

Das Modem MO arbeitet hier als Netzwechselspannungs- bzw. Powerline-Kommunikations-einriditung, beispielsweise in einem Arbeits- bzw. Übertragungsfrequenzbereich von 95 kHz bis 148,5 kHz. Dieser Übertragungsfrequenzbereidi liegt damit deutlich oberhalb der Netzfrequenz (50 Hz oder 60 Hz) der Netzwechselspannung.

Das betreffende Hausgerät HG oder genauer gesagt dessen zugehörige Sende-/Empfangs-einriditung, also das Modem MO, steht über die Netzwechselspannungs-Leitungsanordnung PL mit wenigstens einer zweiten Sende-/Empfangseinrichtung zur Übertragung von Datensignalen in Kommunikationsverbindung. Die betreffende zweite Sende-/Empfangseinrichtung kann dabei zu einem weiteren Hausgerät oder beispielsweise zu einem gemeinsam für eine Vielzahl von Hausgeräten vorgesehenen Steuer- und Überwachungsgerät gehören. Zwischen diesem Steuer- und Überwachungsgerät und den einzelnen Sende-/Empfangsein-riditungen der jeweils vorhandenen Hausgeräte können Datensignale über die Netzwechselspannungs-Leitungsanordnung übertragen werden, beispielsweise im Zuge der Aktualisierung von Steuerprogrammen für die einzelnen Hausgeräte und/oder zur Durchführung von Ferndiagnosen in den betreffenden Hausgeräten.

Um die bei der in Fig. 1 dargestellten Schaltungsanordnung im Zusammenhang mit der Übertragung von Datensignalen getroffenen Maßnahmen gemäß der Erfindung zu erläutern, wird auf das in Fig. 2 dargestellte Ersatzschaltungsdiagramm eingegangen. Dieses Ersatzschaltungsdiagramm zeigt in seiner linken Hälfte die Impedanzverhältnisse, die auf der Sendeseite einer ersten Sende-/Empfangseinrichtung maßgebend sind, also für den Fall, dass bei der in Fig. 1 dargestellten Schaltungsanordnung von dem Modem MO Datensignale über die Netzwechselspannungs-Leitungsanordnung PL gesendet werden. Diese Datensignale mag ein in Fig. 2 schematisch angedeuteter Generator G erzeugen, der bei einer Sendefrequenz von beispielsweise 132,5 kHz eine Impedanz Zs von ca. 1 Ohm besitzen mag.

Die zwischen dem Netzspannungsleiter NL und dem Nullleiter NO der Netzwechselspannungs-Leitungsanordnung PL wirksame Netzleitungsimpedanz Zn bildet zusammen mit der sendeseitigen Impedanz Zs einen Spannungsteiler, durch den an der Netzleitungsimpedanz Zn nur ein Bruchteil der Amplitude der von dem Generator G abgegebenen Datensignale abfällt. Bei einer üblichen bzw. typischen Netzleitungsimpedanz Zn von ca. 3 Ohm bei der erwähnten Sendefrequenz von z.B. 132,5 kHz fällt an dieser Netzleitungsimpedanz Zn also nur 75% der ursprünglichen Sendeamplitude ab.

Um nun diese Amplitude nicht erheblich weiter abzusenken, ist gemäß der vorliegenden Erfindung vorgesehen, dem mit seiner Impedanz Zfi der Netzleitungsimpedanz Zn parallelliegenden Tiefpass-Netzfilter FI in dem Übertragungsfrequenzbereich des Modems MO, also im vorliegenden Fall bei der Frequenz von 132,5 kHz einen Impedanzwert zu geben, der mindestens doppelt so hoch ist wie die Impedanz Zn in dem betreffenden Übertragungsfrequenzbereich. Wird bei den zuvor angegebenen Zahlenwerten die Impedanz Zfi bei der Frequenz von 132,5 kHz also beispielsweise auf 6 Ohm festgelegt, so ergibt sich eine Gesamtimpedanz aus Zn und Zfi zu 2 Ohm. Dies bedeutet, dass auf der Netzwechselspannungs-Leitungsanordnung PL nunmehr nur noch zwei Drittel, also ca. 67,1% der Spannungsamplitude der vom Generator G abgegebenen Datensignalamplitude verfügbar ist.

Würde man dem Tiefpass-Netzfilter FI bei der erwähnten Frequenz von 132,5 kHz beispielsweise eine Impedanz Zfi von 12 Ohm geben, also das Vierfache der Netzleitungsimpedanz Zn, so ergäbe dies eine Gesamtimpedanz zwischen der Netzleitung NL und dem Nullleiter NO der Netzwechselspannungs-Leitungsanordnung PL von 2,4 Ohm. Dadurch würde auf der Netzwechselspannungs-Leitungsanordnung ca. 70% der Amplitude der von dem Generator G abgegebenen Datensignalamplitude verfügbar sein, also mehr als im zuvor betraditeten Fall. Durch diese Maßnahme wird die Reichweite bei der Übertragung der Datensignale gegenüber dem Fall deutlich erhöht, dass sehr niederohmige Netzfilter FI verwendet werden, das heißt Netzfilter, die bei der erwähnten Frequenz von 132,5 kHz beispielsweise eine Impedanz in der Grö-ßenordnung der Impedanz der Netzwechselspannungs-Leitungs-anordnung oder sogar eine noch unterhalb dieser Impedanz liegende Impedanz aufweisen.

An dieser Stelle sei angemerkt, dass grundsätzlich der zuvor aufgezeigte Effekt der schwächeren Bedämpfung der Netzwechselspannungs-Leitungsanordnung durch ein noch höherchmiges Tiefpass-Filter bei der betrachteten Übertragungsfrequenz erreicht werden könnte. Dies würde jedoch einen erhöhten Schaltungsaufwand erforderlich machen, der unerwünscht ist. Die erfindungsgemäße Maßnahme führt jedenfalls bei relativ geringem Schaltungsaufwand zu einem hinsichtlich der Impedanzverhältnisse optimierten Netz-Tiefpass-filter.

Das Ersatzschaltungsdiagramm gemäß Fig. 2 zeigt in seiner rechten Hälfte die Impedanzverhältnisse, die auf der Empfangsseite einer Schaltungsanordnung der in Fig. 1 gezeigten Art maßgebend sind. Wie ersichtlich, kommt auf der Empfangsseite zunächst einmal eine Übertragungsleitungsimpedanz Zü der zu der betreffenden Empfangsseite hinführenden Netzwechselspannungs-Leitungsanordnung zum Tragen.
Diese Impedanz Zü kann beispielsweise 3 Ohm betragen.

Die über die Impedanz Zü auf der Empfangsseite einer zweiten Sende-/Empfangseinriditung eintreffenden Datensignale werden an der Impedanz Zn der Netzwechselspannungs-Lei-tungsanordnung empfangsseitig wirksam. Dieser Impedanz Zn, die, wie oben ausgeführt, zum Beispiel 3 Ohm betragen kann, liegt zum einen die Impedanz Zfi des auf der Empfangsseite vorgesehenen Netz-Tiefpassfilters parallel, und außerdem liegt der Parallelschaltung aus den Impedanzen Zn und Zfi die Eingangsimpedanz Ze der auf der Empfangsseite vorgesehenen Schaltungsanordnung parallel. Durch diese Parallelschaltung ergibt sich insgesamt ein relativ niedriger Eingangsempfangspegel auf der Empfangsseite. Um diesen Eingangsempfangspegel nicht so stark absinken zu lassen, wird die Impedanz Zfi des empfangsseitig vorgesehenen Netz-Tiefpassfilters in dem Übertragungsfrequenzbereich der gesamten Anordnung wieder so festgelegt, dass er einen Wert aufweist, der mindestens doppelt so hoch ist wie die Impedanz Zn der Netzwechselspannungs-Leitungsanordnung in dem erwähnten Übertragungsfrequenzbereich. Auch die empfangsseitige Eingangsimpedanz Ze wird relativ hoch zu wählen sein.

In Fig. 3 ist der prinzipielle Aufbau eines bei der Schaltungsanordnung gemäß der Erfindung zum Einsatz gelangenden Netz-Tiefpassfilters FI entsprechend einer Ausführungsform veranschaulicht. Das betreffende Netz-Tiefpassfilter FI enthält zwischen einem Eingangsanschluss EN und einem Ausgangsanschluss AN als für die Tiefpassfiltercharakteristik wesentliche Bauelemente ein induktives Bauelement L, wie eine Drosselspule, und eine zwischen einem Ende des betreffenden induktiven Bauelements L und einer zwischen einem Eingangsanschluss E0 und einem Ausgangsanschluss A0 vorhandenen Verbindungsleitung liegende Kondensatoranordnung C1, C2 und C3. In der Schaltungsanordnung gemäß Fig. 1 ist der gerade betrachtete Eingangsanschluss EN mit dem Netzleiter NL verbunden, und der gerade betrachtete Eingangsanschluss E0 ist mit dem Nullleiter NO verbunden. Mit den Ausgangsanschlüssen AN und A0 gemäß Fig. 3 ist das in Fig. 1 dargestellte Netzteil PS eingangsseitig verbunden.

Die vorstehend erwähnte Kondensatoranordnung besteht aus einem das netzteilseitige Ende des induktiven Bauelements L mit dem Nullleiter der Netzwechselspannungs-Leitungsan-ordnung verbindenden einzelnen Kondensator C1, der auch als X-Kondensator bezeichnet wird, und aus einer dem einzelnen Kondensator C1 parallelgeschalteten Reihenschaltung aus zwei Kondensatoren C2, C3, die auch als Y-Kondensatoren bezeichnet werden. Der gemeinsame Verbindungspunkt der beiden zuletzt erwähnten Kondensatoren C2 und C3 ist mit einem Masseanschluss des zugehörigen Netzteiles PS verbunden.

Der vorstehend betrachteten Kondensatoranordnung, bestehend aus den Kondensatoren C1, C2 und C3, ist gemäß Fig. 3 ein ohmscher Widerstand R parallelgeschaltet, der relativ hochohmig sein kann und der beispielsweise einen Wert von 500 kOhm aufweisen kann. Dieser ohmsche Widerstand R dient, wie oben bereits erwähnt, dazu, die Kondensatoranordnung zu entladen, wenn das Netzfilter FI nicht durch eine Netzspannung gespeist wird.

Zusätzlich zu den zuvor betrachteten Bauelementen weist das in Fig. 3 dargestellte Netz-Tiefpassfilter noch eine stromkompensierte Drossel DR mit zwei Wicklungen W1, W2 auf. Die eine Wicklung W1 liegt in dem Leitungszweig, zwischen dem Eingangsanschluss EN und dem Ausgangsansdiuss AN, und die andere Wicklung W2 liegt in dem Leitungszweig zwischen dem Eingangsanschluss E0 und dem Ausgangsanschluss A0. Diese stromkompensierte Drossel DR dient lediglich zur Unterdrückung von Gleichtakt-Störsignalen, die vom Netzteil PS herkommen könnten und die nicht in das Netzwecliselspannungsnetz gelangen dürfen. Sowohl die betreffende stromkompensierte Drossel DR wie auch der hochohmige Widerstand R haben keinen Einfluss auf die Tieipasscharakteristik des dargestellten Netz-Tiefpassfilters. Die Charakteristik des betreffenden Netz-Tiefpassfilters wird allein durch das induktive Bauelement L und die Kondensatoren C1, C2 und C3 bestimmt. Die betreffende Kondensatoranordnung kann dabei gegebenenfalls auf einen einzigen Kondensator, wie den Kondensator C1 reduziert sein.

### Bezugszeichenliste

**Tabelle 1**

| | |
|---|---|
| A0 | Ausgangsanschluss |
| AN | Ausgangsanschluss |
| C1 | Kondensator |
| C1, C2, C3 | Kondensatoranordnung |
| C2 | Kondensator |
| C3 | Kondensator |
| CT | Steuereinrichtung |
| DR | stromkompensierte Drossel |
| E0 | Eingangsanschluss |
| EN | Eingangsanschluss |
| H | Netzfilter, Netz-Tiefpassfilter |
| G | Generator |
| HG | Hausgerät |
| L | induktives Bauelement, Drosselspule |
| MO | Sende-/Empfangseinrichtung, Modem |
| N0 | Nullleiter |
| NL | Netzleiter |
| PL | Netzwechselspannungs-Leitungsanordnung |
| PS | Netzteil |
| R | ohmscher Widerstand |
| W1 | Wicklung |
| W2 | Wicklung |
| Ze | Eingangsimpedanz |
| Zfi | Impedanz |
| Zn | Netzleitungsimpedanz |
| Zs | Impedanz |
| Zü | Übertragungsleitungsimpedanz |

## Patentansprüche

1. Schaltungsanordnung zur Übertragung von Datensignalen von und/oder zu Hausgeräten zwischen einer ersten Sende-/Empfangseinrichtung und einer zweiten Sende-/Empfangseinrichtung über eine Netzwechselspannungs-Leitungsanordnung in einem Übertragungsfrequenzbereich, der oberhalb der Frequenz der Netzwechselspannung liegt, wobei die jeweilige Sende-/Empfangseinrichtung ein Netzteil enthält, welches mit seinem Eingangskreis über ein Netz-Tiefpassfilter an der Netzwechselspannungs-Leitungsanordnung angeschlossen ist, **dadurch gekennzeichnet, dass** das im Eingangskreis des Netzteiles (PS) angeordnete Netz-Tiefpassfilter (FI) einen solchen Impedanzverlauf aufweist, dass dessen Impedanz (Zfi) in dem genannten Übertragungsfrequenzbereich einen Wert aufweist, der mindestens doppelt so hoch bis höchstens vierfach so hoch ist wie die Impedanz (Zn) der Netzwechselspannungs-Leitungsanordnung (PL) in dem betreffenden Übertragungsfrequenzbereich.

2. Schaltungsanordnung nach Anspruch 1, **dadurch gekennzeichnet, dass** bei einer wenigstens einen spannungsführenden Netzleiter (NL) und einen Nullleiter (NO) umfassenden Netzwechselspannungs-Leitungsanordnung (PL) das Netz-Tiefpassfilter (FI) aus einem in dem jeweiligen Netzleiter (NL) liegenden induktiven Bauelement (L) und einer zwischen wenigstens einem Ende des betreffenden induktiven Bauelements (L) und dem Nullleiter (NO) angeordneten Kondensatoranordnung (C1; C2, C3) besteht.

3. Schaltungsanordnung nach Anspruch 2, **dadurch gekennzeichnet, dass** die Kondensatoranordnung (C1; C2, C3) aus einem das netzteilseitige Ende des induktiven Bauelements (L) mit dem Nullleiter(NO) der Netzwechselspannungs-Leitungsanordnung (PL) verbindenden einzelnen Kondensator (X-Kondensator) (C1) und aus einer diesem einzelnen Kondensator (C1) direkt parallelgeschalteten Reihenschaltung aus zwei Kondensatoren (Y-Kondensatoren) (C2, C3) besteht, deren gemeinsamer Verbindungspunkt mit einem Masseanschluss des zugehörigen Netzteiles (PS) verbunden ist.

## Claims

1. Circuit arrangement for transmission of data signals from and/or to domestic appliances between a first transmitting/receiving device and a second transmitting/receiving device via a mains alternating voltage conductor arrangement in a transmission frequency range lying above the frequency of the mains alternating voltage, wherein the respective transmitting/receiving device includes a power supply unit which is connected by its input circuit via a mains low-pass filter with the mains alternating voltage conductor arrangement, **characterised in that** the mains low-pass filter (FI) arranged in the input circuit of the power supply unit (PS) has such an impedance path that the impedance (Zfi) thereof has in the said transmission frequency range a value which is at least twice as high to at most four times as high as the impedance (Zn) of the mains alternating voltage conductor arrangement (PL) in the respective transmission frequency range.

2. Circuit arrangement according to claim 1, **characterised in that** in the case of a mains alternating voltage conductor arrangement (PL) comprising at least one voltage-conducting mains conductor (NL) and a neutral conductor (NO) the mains low-pass filter (FI) consists of an inductive component (L), which lies in the respective mains conductor (NL), and a capacitor arrangement (C1; C2, C3) which is arranged between at least one end of the respective inductive component (L) and the neutral conductor (N0).

3. Circuit arrangement according to claim 2, **characterised in that** the capacitor arrangement (C1, C2, C3) consists of a single individual capacitor (X capacitor) (C1), which connects the end of the inductive component (L) at the power supply unit side with the neutral conductor (N0) of the mains alternating voltage conductor arrangement (PL), and a series circuit, which is directly connected in parallel with this single capacitor (C1), consisting of two capacitors (Y capacitors) (C2, C3), the common connecting point of which is connected with a ground connection of the associated power supply unit (PS).

## Revendications

1. Circuiterie destinée à transmettre des signaux de données depuis et/ou vers des appareils électroménagers entre un premier dispositif d'émission/réception et un second dispositif d'émission/réception par l'intermédiaire d'un dispositif de ligne de tension alternative de réseau dans une gamme de fréquence de transmission située au-delà de la fréquence de la tension alternative de réseau, le dispositif respectif d'émission/réception comprenant un bloc secteur qui, avec son circuit d'entrée, est raccordé au dispositif de ligne de tension alternative de réseau par l'intermédiaire d'un filtre passe-bas de réseau, **caractérisée en ce que** le filtre passe-bas de réseau (FI) disposé dans le circuit d'entrée du bloc secteur (PS) présente une telle courbe d'impédance que son impédance (Zfi) présente, dans la gamme de fréquence de transmission mentionnée, une valeur qui est au moins deux fois plus élevée, au maximum jusqu'à quatre fois plus élevée que l'impédance (Zn) du dispositif de ligne de tension alternative de réseau (PL) dans la gamme de fréquence de transmission concernée.

2. Circuiterie selon la revendication 1, **caractérisée en ce que** dans un dispositif de ligne de tension alternative de réseau comprenant au moins un conducteur de réseau (NL) conducteur de tension et un conducteur neutre (NO), le filtre passe-bas de réseau (FI) est constitué d'un composant inductif (L) situé dans le conducteur de réseau (NL) respectif et d'un dispositif de condensateurs (C1 ; C2, C3) disposé entre au moins une extrémité du composant inductif (L) concerné et le conducteur neutre (NO).

3. Circuiterie selon la revendication 2, **caractérisée en ce que** le dispositif de condensateurs (C1 ; C2, C3) est constitué d'un condensateur individuel (condensateur X) (C1) raccordant l'extrémité, côté réseau, du composant inductif (L) au conducteur neutre (NO) du dispositif de ligne de tension alternative de réseau (PL) et d'un montage en série connecté directement en parallèle avec ce condensateur individuel (C1), ce montage en série étant composé de deux condensateurs (condensateurs Y) (C2, C3), dont le point de liaison commun est raccordé à un raccord de masse du bloc secteur correspondant (PS).
